# EUROPÄISCHE PATENTANMELDUNG

(11) **EP 0 745 414 A1**
(43) Veröffentlichungstag der Anmeldung: **04.12.1996**
(21) Anmeldenummer: 96108529.7
(22) Anmeldetag: 29.05.1996
(51) Int. Cl.: B01D 29/37, B01D 46/24, B01D 29/25, B01D 29/01, B01D 46/10

(54) **Querstromfilter**

(30) Priorität: 30.05.1995 DE 19519758
(71) Anmelder: SIEMENS AKTIENGESELLSCHAFT, 80333 München (DE)
(72) Erfinder: Lisson, Johann, Dr., 64291 Darmstadt (DE); Gliha, Viktor, 63456 Hanau (DE); Blinn, Klaus, Dipl.-Ing., 63322 Rödermark (DE); Kleinschroth, Karl-Heinz, Dipl.-Ing., 60528 Frankfurt (DE)

(57) **Zusammenfassung**

Um für einen Querstromfilter (1) mit einer Anzahl von zur Durchströmung von einem zu filternden Medium vorgesehenen Filtereinsätzen (4) eine lange Lebensdauer zu erzielen und dadurch zur Abfallvermeidung beizutragen, weist erfindungsgemäß der oder jeder Filtereinsatz (4) an seinen Seitenflächen (6) ein Metallgewebe auf.

## Beschreibung

Die Erfindung betrifft einen Querstromfilter mit einer Anzahl von zur Durchströmung durch ein zu filterndes Medium vorgesehenen Filtereinsätzen.

Bei einer Filtration durchströmt ein zu filterndes Medium einen Filter. Um eine Verstopfung des Filters durch Filterrückstände zu vermeiden oder zu erschweren, kann für eine dynamische Filtration ein sogenannter Querstromfilter eingesetzt werden, wie dieser z.B. aus der EP-B 0 249 719 bekannt ist. Bei einem Querstromfilter mit in einem Gehäuse angeordnetem rohrförmigen Filtereinsätzen werden diese bei einer Filtration vom zu filternden Medium durchströmt, wobei ein erster Anteil des Mediums den Filtereinsatz in Längsrichtung durchströmt (Längsstrom). Dieser erste Anteil wird sodann ungefiltert zu dem zu filternden Medium zurückgeführt. Ein zweiter Anteil durchtritt die Oberfläche des Filtereinsatzes (Querstrom) und wird dabei gefiltert. Durch die Filtration des Querstroms bilden sich an der Oberfläche jedes Filtereinsatzes Filterrückstände, deren Anhaften an der Oberfläche des Filtereinsatzes jedoch durch die Überströmung des Längsstroms verhindert wird. Somit ist ein Verstopfen eines derartigen Querstromfilters erschwert.

In Querstromfiltern werden üblicherweise Filtereinsätze aus Keramik- oder Sintermaterialien oder auch aus Kunststoff verwendet. Diese Materialien neigen jedoch auch bei einem Einsatz in Querstromfiltern zur Aufnahme von Ablagerungen des zu filternden Materials und somit zu Verstopfungen. Daher müssen diese Filtereinsätze üblicherweise ausgewechselt und durch neue Filtereinsätze ersetzt werden. Insbesondere bei der Filtration von toxischen oder radioaktiven Stoffen soll jedoch jeglicher derartige Stoffe enthaltender Abfall weitestgehend vermieden werden.

Der Erfindung liegt daher die Aufgabe zugrunde, zur Abfallvermeidung einen Querstromfilter mit einer Anzahl von zur Durchströmung durch ein zu filterndes Medium vorgesehenen Filtereinsätzen anzugeben, der eine besonders lange Lebensdauer aufweist.

Diese Aufgabe wird für einen Querstromfilter der oben genannten Art erfindungsgemäß dadurch gelöst, daß der oder jeder Filtereinsatz an seinen Seitenflächen ein Metallgewebe aufweist.

Wie sich überraschenderweise gezeigt hat, neigen insbesondere bei zu filterndem Abfallschlamm aus kerntechnischen Anlagen die in diesem enthaltenen Feststoffpartikel weniger zum Anhaften an Metallgewebe als an herkömmlichen Filtereinsätzen. Darüber hinaus ist ein ein Metallgewebe aufweisender Filtereinsatz nahezu rückstandsfrei reinigbar. Somit kann ein derartiger Filtereinsatz auch nach einer Verstopfung, beispielsweise durch Rückblasen, gereinigt und einer erneuten Verwendung zugeführt werden, so daß zusätzlicher Abfall vermieden ist.

Um eine konstante Maschenweite des Metallgewebes der Filtereinsätze und somit die Einhaltung einer vorgegebenen Porennenngröße sicherzustellen, weist vorteilhafterweise der oder jeder Filtereinsatz einen mehreckigen, vorzugsweise einen viereckigen, Querschnitt auf. Ein derartiger Filtereinsatz kann aus nahezu ebenen Metallgewebestücken zusammengesetzt sein, die an ihren Kanten miteinander verbunden sind. Dadurch ist ein Biegen des Metallgewebes nicht erforderlich, so daß die Porengröße des Metallgewebes unverändert ist. Durch einen derartigen mehreckigen Querschnitt der Filtereinsätze ist zudem eine höhere Packungsdichte der Filtereinsätze innerhalb des Querstromfilters erreichbar, so daß der Materialdurchsatz durch den Querstromfilter maximiert ist.

Vorteilhafterweise weist der oder jeder Filtereinsatz an seinen Enden einen runden Querschnitt auf. In weiterer vorteilhafter Ausgestaltung sind die Filtereinsätze mit ihren Enden in gemeinsame Gehäuseplatten geführt. Der runde Querschnitt an den Enden jedes Filtereinsatzes erleichtert dabei aufgrund seiner im Vergleich zu einem eckigen Querschnitt höheren Symmetrie eine Montage.

Ein Ausführungsbeispiel der Erfindung wird anhand einer Zeichnung näher erläutert. Darin zeigen:
- FIG 1: einen Querstromfilter im Querschnitt,
- FIG 2: einen Filtereinsatz im Längsschnitt, und
- FIG 3: eine Gehäuseplatte des Querstromfilters gemäß Figur 1.

Gleiche Teile sind in beiden Figuren mit den gleichen Bezugszeichen versehen.

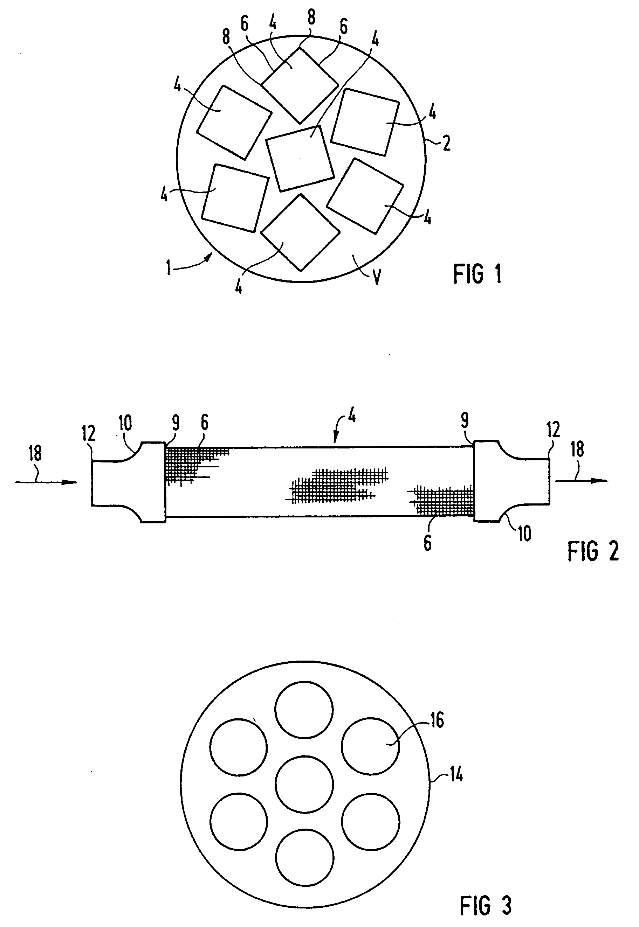

Ein Querstromfilter 1 gemäß Figur 1 umfaßt eine Anzahl von in einem Gehäuse 2 angeordneten Filtereinsätze 4, von denen ein jeder einen viereckigen Querschnitt aufweist. Gemäß dem Ausführungsbeispiel sind sieben Filtereinsätze 4 vorgesehen. Es kann aber auch lediglich ein Filtereinsatz 4 oder eine beliebige andere Anzahl von Filtereinsätzen 4 vorgesehen sein. Jeder Filtereinsatz 4 weist ebene Seitenflächen 6 aus Metallgewebe auf, die an den Kanten 8 miteinander verbunden, beispielsweise verschweißt oder verlötet, sind. Somit ist ein Biegen des Metallgewebes der Seitenflächen 6 nicht erforderlich, so daß ein Strecken oder Stauchen des Metallgewebes vermieden ist. Dadurch bleibt die Gewebestruktur des Metallgewebes unverändert. Die Porengröße des Metallgewebes und auch Gewebeabstände weichen somit nicht von erforderlichen Nennwerten ab.

Der viereckige Querschnitt der Filtereinsätze 4 ermöglicht zudem eine hohe Packungsdichte der Filtereinsätze 4 innerhalb des Gehäuses 2. Der gesamte von Seitenflächen 6 umschlossene Flächenanteil an der vom Gehäuse 2 umschlossenen Querschnittsfläche ist dabei besonders hoch, so daß der mögliche Materialdurchsatz durch den Querstromfilter 1 entsprechend hoch ist.

Wie in Figur 2 gezeigt, umfaßt jeder Filtereinsatz 4 an seinen Enden 9 angeordnete Anschlußstücke 10, die an ihren freien Enden 12 einen runden Querschnitt aufweisen. Die Enden 12 der Filtereinsätze 4 sind in den Filtereinsätzen 4 gemeinsame Gehäuseplatten 14 geführt. Eine solche Gehäuseplatte 14 ist in Figur 3 dargestellt. Dabei handelt es sich um eine Deck- oder Bodenplatte mit runden Aussparungen 16 zur Aufnahme der freien Enden 12 der Filtereinsätze 4. Die Gehäuseplatten 14 sind zum Verschluß am Gehäuse 2 angeordnet. Der runde Querschnitt an den freien Enden 12 der an den Filtereinsätzen 4 angeordneten Anschlußstücke 10 ermöglicht dabei eine erleichterte Montage der Gehäuseplatten 14.

Bei einem Betrieb des Querstromfilters 1 durchströmt ein zu filterndes Medium die Filtereinsätze 4 in Längsrichtung, wie durch die Pfeile 18 angedeutet. Ein flüssiger Bestandteil des zu filternden Mediums kann dabei das Metallgewebe der Seitenflächen 6 quer zur Längsrichtung durchtreten und gelangt so in das vom Gehäuse 2 umschlossene Volumen V, von wo aus es einer Ableitung zugeführt werden kann. Ein Anhaften des im Innenraum der Filtereinsätze 4 verbleibenden feststoffhaltigen Bestandteils des Mediums an den Seitenflächen 6 ist durch die Durchströmung des Mediums durch die Filtereinsätze 4 in Längsrichtung vermieden.

Im Falle einer Verstopfung des Metallgewebes kann dieses, beispielsweise durch Rückblasen, nahezu rückstandsfrei gereinigt werden. Somit ist eine lange Lebensdauer der Filtereinsätze 4 gewährleistet, was zu einer Abfallvermeidung beiträgt.

## Patentansprüche

1. Querstromfilter mit einer Anzahl von zur Durchströmung durch ein zu filterndes Medium vorgesehenen Filtereinsätzen,
**dadurch gekennzeichnet,** daß der oder jeder Filtereinsatz (4) an seinen Seitenflächen (6) ein Metallgewebe aufweist.

2. Querstromfilter nach Anspruch 1,
**dadurch gekennzeichnet,** daß der oder jeder Filtereinsatz (4) einen mehreckigen, vorzugsweise einen viereckigen, Querschnitt aufweist.

3. Querstromfilter nach Anspruch 1 oder 2,
**dadurch gekennzeichnet,** daß der oder jeder Filtereinsatz (4) an seinen Enden (12) einen runden Querschnitt aufweist.

4. Querstromfilter nach einem der Ansprüche 1 bis 3,
**dadurch gekennzeichnet,** daß die Filtereinsätze (4) mit ihren Enden (12) in gemeinsame Gehäuseplatten (14) geführt sind.
